# EUROPEAN PATENT APPLICATION

(11) **EP 3 848 238 A1**
(43) Date of publication of application: **14.07.2021**
(21) Application number: 20305015.8
(22) Date of filing: 10.01.2020
(51) Int. Cl.: B60N 2/06, B60N 2/02, G01D 5/245

(54) **SEAT POSITION SENSOR ARRANGEMENT FOR AN AUTOMOTIVE VEHICLE**

(71) Applicant: TE Connectivity Services GmbH, 8200 Schaffhausen (CH); TE Connectivity Germany GmbH, 64625 Bensheim (DE); Tyco Electronics France SAS, 95300 Pontoise (FR); Tyco Electronics Canada ULC, Markham, ON L3R 1E1 (CA)
(72) Inventor: Irshad, Mohammad, Winston Salem, NC 27101 (US); Swope, Earl Daniel, Kernersville, NC North Carolina 27284 (US); Berger, Christian, 67165 Waldsee (DE); Iordache, Lucian, Woodbridge, Ontario ON L4L 3E1 (CA); Ludwig, Michael, 68305 Mannheim (DE); Contion, Bruno, 25340 Fontaine-lès-Clerval (FR)
(74) Representative: Grünecker Patent- und Rechtsanwälte PartG mbB

(57) **Abstract**

The invention relates to a seat position sensor arrangement (21) for measuring the position of a seat (1) with respect to a fixed part (17) of an automotive vehicle (3). The invention further relates to a method for determining the seat position (25) and/or seat travel distance (23). In order to provide an arrangement and a method for determining the seat position in a reliable but simple manner, it is intended, according to the invention, that the seat position sensor arrangement (21) is provided with at least two wheels (27, 29) that are rotatably coupled by at least one driving mechanism (31) and adapted to rotate with different angular speeds upon being driven by the driving mechanism (31), wherein the seat position sensor arrangement (21) further comprises at least one rotation sensor subassembly (51, 53) for each wheel (27, 29), wherein each rotation sensor subassembly (51, 53) is adapted to measure an angle of rotation (θ1, θ2) of its respective wheel (27, 29).

## Description

The invention relates to a seat position sensor arrangement for measuring the position of a seat, in particular an absolute position and/or a seat travel distance with respect to a fixed part of an automotive vehicle, in particular a chassis. The invention further relates to a vehicle seat which is provided with at least one seat position sensor arrangement according to the invention, to a data processing device for computing a seat position and to a method for determining the seat position and/or a seat travel distance of a vehicle seat.

Seat position sensor arrangements are used to determine the position of a vehicle seat with respect to the chassis of the vehicle. Knowledge of the seat position may be important for safety systems in a vehicle. In particular, the inflation of an airbag may be adapted with respect to a seat position. In other words, the airbag inflation may be increased the farther away a person is seated from the airbag. Vice versa, the airbag inflation may be reduced when a person is seated closer to the airbag, in order to avoid injury to the person's body from the airbag.

Seat position sensor arrangements known in the art often only distinguish between two positions, for example, a position close to the airbag and a position farther away from the airbag. However, in order to adjust the inflation of an airbag with a higher accuracy with respect to the seat position, a higher resolution of the seat position is needed.

It is the object of the invention to provide a seat position sensor arrangement that allows for a reliable determination of the seat position, preferably along a long range and with a required resolution. Furthermore, the seat position sensor arrangement is intended to be manufactured in a simple and cost efficient way.

This object is achieved for the seat position sensor arrangement mentioned in the beginning in that the seat position sensor arrangement is provided with at least two wheels that are rotatably coupled by at least one driving mechanism and adapted to rotate with different angular speeds upon being driven by the driving mechanism, wherein the seat position sensor arrangement further comprises at least one rotation sensor subassembly for each wheel, wherein each rotation sensor subassembly is adapted to measure an angle of rotation of its respective wheel.

Due to the different angular speeds of the wheels, the wheels can be regarded as a Vernier scale or Nonius. In other words, rotating both wheels at the same time will introduce an angle offset between both wheels that can be used for calculating the seat position. The seat is preferably movable along a seat travel direction which is parallel to the driving direction of the vehicle. The seat may be movable along seat rails that are fixated to the chassis. The at least one driving mechanism may be regarded as a prime mover that drives the wheels, for example, with the same circumferential speed.

For the data processing device mentioned in the beginning, the object is achieved in the device being adapted to compute a seat position and/or a seat travel distance of a vehicle seat with respect to a fixed part of an automotive vehicle, in particular a chassis, by receiving two angles of rotation from at least two wheels that rotate with different angular speeds when the seat is moved, and by calculating an offset between these angles, the offset being related, in particular, being proportional, to the seat travel distance.

For the method mentioned in the beginning, the object is achieved in that at least two wheels are driven upon a movement of the seat, the wheels rotating with different angular speeds, wherein the angles of rotation of both wheels are measured, and a seat position and/or a seat travel distance is calculated from the angles of rotation.

In the following, further improvements of the invention are described. The additional improvements may be combined independently of each other, depending on whether a particular advantage of a particular improvement is needed in a specific application.

According to a first advantageous improvement, the seat position sensor arrangement may have a chassis side that is attachable to a chassis of the vehicle and a seat side that is attachable to the movable seat.

In order to simply generate two different angular speeds for the wheels, the at least two wheels are preferably provided with different diameters. When a driving mechanism drives the two wheels with the same circumferential speed, different diameters will result in different angular speeds. A different way of generating different angular speeds may be a gearing mechanism in at least one of the wheels.

At least one of the wheels may be a gear wheel. Thereby, the wheel can simply be driven by the at least one driving mechanism, which is preferably provided with corresponding gears that may engage with the gears of the gear wheel. In the alternative, at least one of the wheels may be a friction wheel.

The at least one driving mechanism may be arranged on a seat side of the seat position sensor arrangement. In other words, the at least one driving mechanism may also keep its relative position to the wheels when the seat is moved along the seat travel direction.

In order to provide a simple set up, the at least one driving mechanism may be a drive gear. The at least one drive gear is preferably arranged such that it is functionally coupled to the two wheels.

In other words, the drive gear may engage both wheels, thereby driving them when the drive gear rotates. The drive gear is preferably adapted to be driven by a seat motor. This can be achieved by providing the drive gear with a connection element that is connectable to the seat motor, preferably a shaft or an opening into which a shaft from the seat motor may be inserted.

In the alternative to a driving gear, the at least one driving mechanism may be a gear rack. Said gear rack may preferably be fixated on a chassis of the vehicle, for example on the seat rail or in the vicinity of the same. A longitudinal direction of the gear rack is preferably basically parallel with the seat travel direction and therefore with the seat rails. The gear rack form a chassis side of the seat position sensor arrangement.

The gear rack may engage both wheels of the seat position sensor arrangement. The two wheels may be rotatably fixated to the seat. When the seat moves along the seat travel direction, the wheels which engage the gear rack will be driven by the gear rack with the same circumferential speed, and thereby rotating with different angular speeds.

At least one rotation sensor subassembly is preferably a magnetic sensor arrangement, more preferably comprising at least one Hall sensor element. At least one of the rotation sensor subassemblies may be a rotary encoder. Magnetic sensor arrangements are reliable and easy to produce.

Preferably, at least one magnetic sensor arrangement comprises at least one magnet and at least one magnetic sensor element, wherein the at least one magnet is functionally coupled to, in particular attached to, at least one wheel, and the at least one sensor element is arranged in a vicinity of the at least one magnet to measure a magnetic field of the at least one magnet. The relative position of the sensor element with respect to the magnet is preferably fixed with respect to longitudinal movements. In other words, when a wheel rotates, it generates a rotation of its respective magnet, and the magnetic sensor element detects this rotation by measuring the changing magnetic field. The magnetic sensor element does not rotate with the magnet, but moves together with the wheel along the seat travel direction when the seat moves.

In the alternative to a magnetic sensor arrangement, at least one rotation sensor subassembly may be an optic encoder or a capacitive or mechanical rotation sensor.

According to another advantageous embodiment, at least one of the rotation sensor subassemblies is formed by an inductive sensor arrangement. For example, a conductive coil may be used as a sensor element forming a stator element of the inductive sensor arrangement. Duringmeasurement, the conductive coil is used as a conductor by allowing an electric current to flow through the same. On the corresponding wheel, a passive element can be placed as a rotor element of the inductive sensor arrangement. The conductive coil of the stator element can be used to induce an electric current in the passive element that, in turn, can be measured, in particular by the stator element. The passive element of the rotor may also comprise at least one conductive coil.

The seat position sensor arrangement is preferably connectable to a seat of the vehicle in order to move together with the seat. More preferably, the seat position sensor arrangement, at least its seat side, may be housed in a common housing.

In the alternative, the at least two wheels and the corresponding rotation sensor subassembly are connectable to a seat of the vehicle in order to move together with the seat, and the at least one driving mechanism is fixatable to a fixed part of the vehicle. As mentioned above, the two wheels and the corresponding rotation sensor subassemblies may form a seat side of the sensor arrangement and the driving mechanism, in particular a gear rack may form a chassis side of the sensor arrangement. In an alternative embodiment, the arrangement can also be reversed. For example, a gear rack may be arranged on the seat moving together with the same, and the two wheels and the corresponding rotation sensor subassemblies may be installed on the chassis of the vehicle.

In order to calculate the seat position, the seat position sensor arrangement preferably further comprises at least one data processing device, adapted to receive the angles of rotation from the rotation sensor subassemblies and to calculate or compute a seat position and/or a seat travel distance from the angles of rotation. The data processing device may, for example, be an integrated circuit, preferably an application-specific integrated circuit (ASIC). The data processing device is preferably arranged inside a common housing of the arrangement, in particular together with at least one of the rotation sensor subassemblies or at least a part thereof.

The at least one data processing device is preferably further adapted to submit a value representing the seat position and/or the seat travel distance to an airbag control system of the vehicle. The data processing device may therefore be provided with a data connection, either a wire-based or a wireless connection.

For example, the data processing device may be adapted to compute the position of the seat depending on an offset of the two angles of rotation. The angle offset is preferably proportional to a seat position and/or a seat travel distance.

In the following, the invention and its improvements are described in greater detail using exemplary embodiments and with respect to the drawings. As described above, the various features shown in the embodiments may be used independently from each other in specific applications.

In the following figures, elements having the same function and/or the same structure will be referenced by the same reference signs.

In the drawings:
- Fig. 1: shows schematically a vehicle seat and an airbag;
- Fig. 2: shows the wheels of a first embodiment of a seat position sensor arrangement according to the invention in a side view;
- Fig. 3: shows the wheels of Fig. 2 with attached magnets and sensor elements in a perspective view;
- Fig. 4: shows the wheels and a rack gear of a second embodiment of the seat position sensor arrangement according to the invention in a side view;
- Fig. 5: shows the embodiment of Fig. 4 with magnets and sensor elements in a perspective view;
- Fig. 6: shows the sensor output of both sensor elements;
- Fig. 7: shows the difference between the angular positions of Fig. 6; and
- Fig. 8: shows the angle offset over the unique linear travel position derived from the values of Fig. 7.

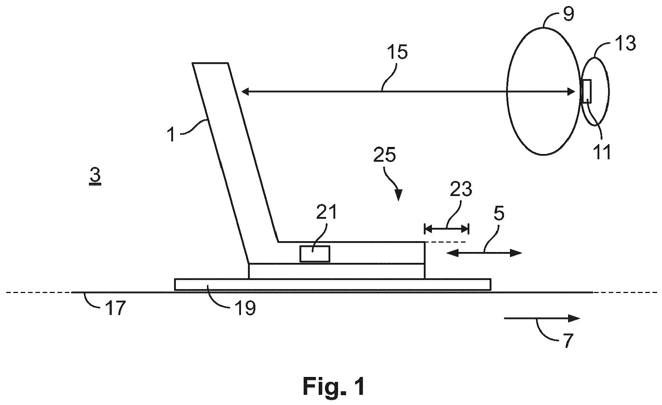

In the following, a vehicle seat and an airbag are described with respect to Fig. 1 for explanatory purposes.

A vehicle seat 1 is arranged inside a vehicle 3. The vehicle seat 1 is movable along a seat travel direction 5, which is preferably parallel to a driving direction 7 of the vehicle 3. The vehicle 3 is provided with an airbag 9, which is controlled by an airbag control system 11.

Usually, the airbag 9 is seated in a steering wheel 13 of the vehicle 3. Just by way of example, the airbag control system 11 is shown as part of the steering wheel 13 in Fig. 1. The airbag 9 can be inflated when an accident is detected.

It is intended to control the amount of inflation depending on the distance 15 between the steering wheel 13 and the seat 1. When the distance 15 is large and a person on the seat 1 is far away from the steering wheel 13, the airbag 9 should be inflated to a larger volume and/or gas pressure compared to a smaller distance 15, when a person is located closer to the steering wheel 13.

In order to control the amount of inflation of the airbag 9, the distance 15 should be known. This distance can be derived or at least estimated when the position of the seat 1 with respect to a fixed part of the vehicle 3, in particular the chassis 17, is known.

The seat 1 is movable along the seat travel direction 5 with respect to the chassis 17. The seat 1 may be movably arranged on seat rails 19, which are fixated to the chassis 17. Just by way of example, Fig. 1 shows the seat 1 being provided with a seat position sensor arrangement 21 according to the invention. In the alternative, the arrangement 21 could also be arranged on the chassis 17, in particular on one of the seat rails 19. The seat position sensor arrangement 21 may be adapted to either measure a travel distance 23 of the seat 1 along the seat travel direction 5, or an absolute position 25 of the seat 1.

Preferably, the seat position sensor arrangement is connected with the airbag control system 11, either via a wired connection (not shown) or a wireless connection.

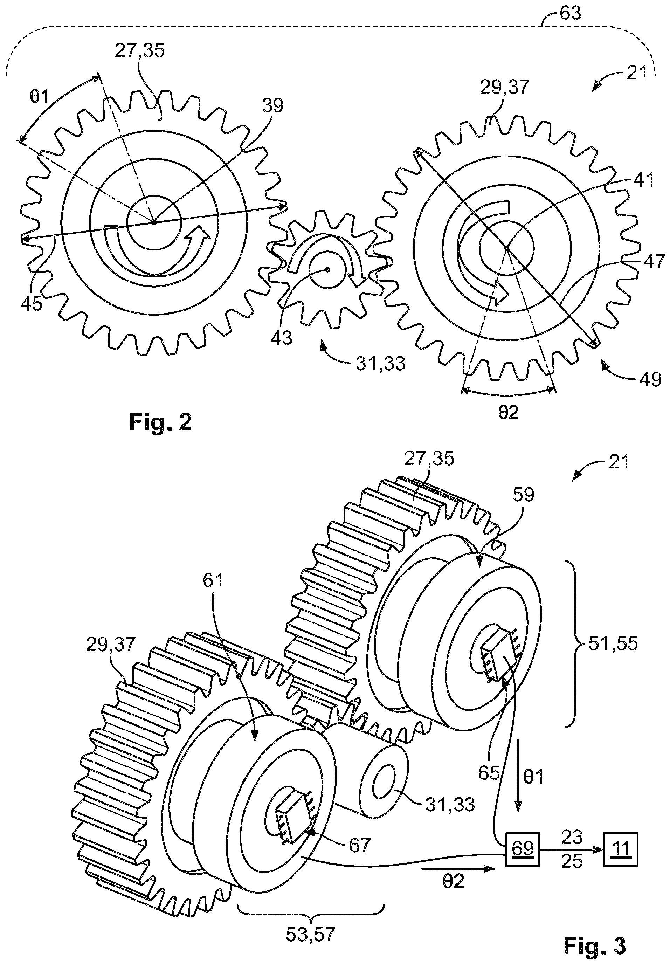

In the following, a first advantageous embodiment of the seat position sensor arrangement 21 is described with respect to Figs. 2 and 3.

The seat position sensor arrangement 21 is provided with two wheels 27, 29. The two wheels 27, 29 are adapted to rotate with different angular speeds when they are driven by the same driving mechanism 31. The two wheels 27, 29 are rotatably coupled by the driving mechanism 31.

The driving mechanism 31 is formed as a drive gear 33 and the two wheels 27, 29 are formed as gear wheels 35, 37. The gear wheels 35, 37 are rotatably coupled by the drive gear 33 due to the gears of the wheels 33, 35, 37 engaging with each other. In this embodiment, the driving mechanism 31 is arranged on a seat side 49 of the arrangement 21.

Preferably, the drive gear 33 is arranged between the gear wheels 35, 37. Each of the wheels 27, 29, 33 is rotatable around an axis of rotation, 39, 41, 43. Preferably, all axes of rotation 39, 41, 43 are parallel to each other. In Fig. 2, the axes 39, 41, 43 are perpendicular to the paper plane.

The wheel 27 has a diameter 45, which is different from the diameter 47 of the wheel 29, just by way of example, smaller. Due to the difference in diameters, the wheels 27, 29 will rotate with different angular speeds upon being driven by the driving mechanism 31. In other words, when the driving mechanism 31 or drive gear 33 rotates for a certain amount of time, the wheels 27, 29 will move with the same circumferential speed which is predetermined by the speed of the drive gear 33. However, due to the difference in diameters, the angle of rotation θ1 of the smaller wheel 27 is larger than the angle of rotation θ2 of the larger wheel 29.

The drive gear 33 is preferably coupled to a seat motor (not shown) for driving the seat 1 along the seat rails 19. Consequently, driving the seat 1 by the seat motor will automatically rotate the wheels 27, 29 such that the seat travel distance 23 may easily be derived.

In order to measure the angles θ1, θ2, the arrangement 21 is further provided with a rotation sensor subassembly 51, 53 for each of the wheels 27, 29. Each rotation sensor subassembly 51, 53 is preferably a magnetic sensor arrangement 55, 57. In the alternative, the rotation sensor subassemblies 51, 53 may also be formed by other sensor arrangements, for example optical, mechanical or capacitive sensor arrangements.

Each magnetic sensor arrangement 55, 57 is provided with a magnet 59, 61, wherein each magnet is rotatably coupled to its corresponding wheel 27, 29. Furthermore, each magnetic sensor arrangement 55, 57 is provided with a magnetic sensor element 63, 65 which is arranged in the vicinity of its corresponding magnet 59, 61 in order to measure the magnetic field of the corresponding magnet and thereby detecting the rotation of each magnet 59, 61. Each of the magnets 59, 61 has at least two magnetic poles. In the alternative, each magnet 59, 61 can be provided with multiple poles in order to increase the resolution of the sensor subassemblies 51, 53.

The magnetic sensor elements 65, 67 are preferably connected to a data processing device 69, which is adapted to receive the angles of rotation θ1, θ2, and to calculate the seat travel distance 23 and/or the seat position 25 and submit the same to the airbag control system 11. The seat travel distance 23 may for example be calculated from an offset between the angles θ1, θ2.

The device 69 may be arranged with the other elements of the arrangement 21, in particular with elements of the seat side 49 in a common housing 63 of the arrangement 21. In the alternative, the device 69 could be part of the airbag control system 11 or of a vehicle control system (not shown).

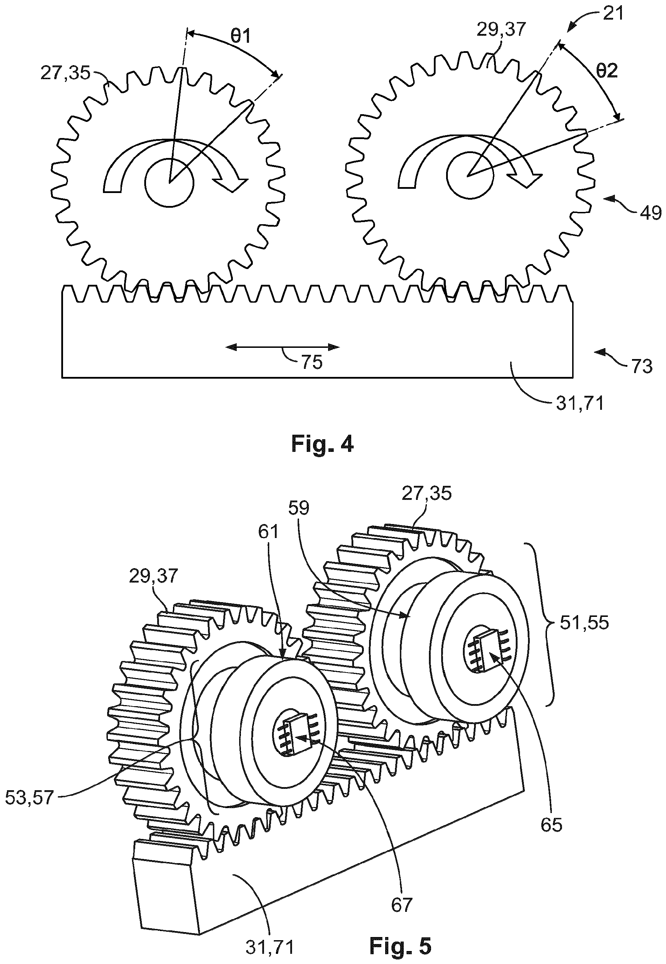

In the following, a second advantageous embodiment of the invention is described with respect to Figs. 4 and 5. For the sake of brevity, only the differences to the embodiment described with respect to Figs. 2 and 3 are described in detail.

In contrast to the first mentioned embodiment, the second embodiment is provided with a driving mechanism 31 that is formed as a gear rack 71. The gear rack 71 preferably extends with a longitudinal direction 75 parallel to the seat travel direction 5.

The gear rack 71 may be fixated to the chassis 17 and/or one of the seat rails 19. In other words, the gear rack 71 may be arranged on a chassis side 73 of the sensor arrangement 21, whereas the remaining parts, i.e. the wheels 27, 29 and the rotation sensor subassemblies 51, 53, are arranged on the seat side 49 of the arrangement and move together with the seat 1. In the alternative, this arrangement can also be reversed.

When the seat 1 moves along the seat travel direction 5, the wheels 27, 29 are set into rotational motion by the gear rack 71 and, as described before, rotate with different angular speeds, thereby resulting in different angles of rotation θ1, θ2.

As mentioned before, these angles of rotation θ1, θ2 can be detected by the rotation sensor subassemblies 51, 53. A data processing device 69 may calculate the seat travel distance 23 and/or the seat position 25 and submit the same to the airbag control system 11.

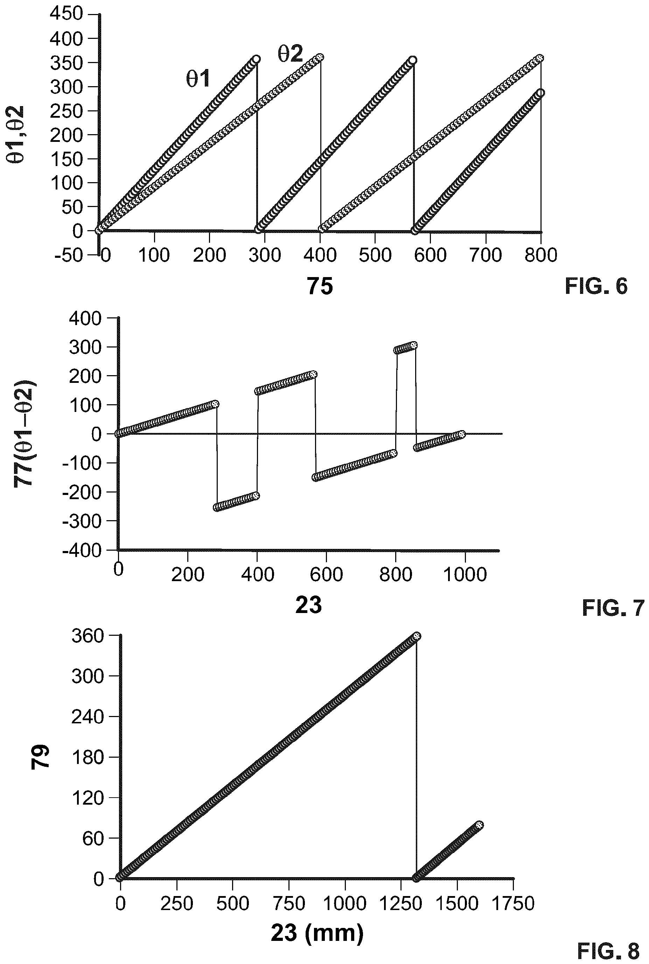

In the following, computing the seat travel distance 23 from the measured angles θ1, θ2 is briefly described with respect to Figs. 6 to 8. The following method of calculating or computing can be performed in the device 69. It should be noted that also other ways of calculating the seat travel distance 23 from the measured angles θ1, θ2 are possible.

In Fig. 6, the sensor output θ1, θ2 is shown, wherein the abscissa shows the travel distance 75 of the circumferences of the wheels.

From the angles θ1, θ2, the angular difference 77 may be calculated, which is shown in Fig. 7, wherein the abscissa shows the travel direction 23.

Finally, from the angular difference 77, the angle offset 79 can be calculated, which is shown in Fig. 8. The angle offset 79 directly relates to the travel position 25 and/or the seat travel distance 23. As mentioned above, using the offset 79 represents only one possible way of calculating the travel position 25 and/or the seat travel distance 23.

Consequently, the seat position 25 can be derived from the angle offset 79. In the shown example, the seat position 25 or travel distance 23 can be measured along a wide range of about 1,300 mm, in this example, wheels having diameters of 28 and 30 mm have been used.

### REFERENCE NUMERALS

- 1: Vehicle seat
- 3: Vehicle
- 5: Seat travel direction
- 7: Driving direction
- 9: Airbag
- 11: Airbag control system
- 13: Steering wheel
- 15: Distance between seat and steering wheel
- 17: Chassis
- 19: Seat rail
- 21: Seat position sensor arrangement
- 23: Seat travel distance
- 25: Seat position
- 27: Wheel
- 29: Wheel
- 31: Driving mechanism
- 33: Drive gear
- 35: Gear wheel
- 37: Gear wheel
- 39-43: Axes of rotation
- 45,47: Diameter
- 49: Seat side
- 51, 53: Rotation sensor sub-assembly
- 55, 57: Magnetic sensor arrangement
- 59, 61: Magnet
- 63: Common housing
- 65, 67: Magnetic sensor element
- 69: Data processing device
- 71: Gear rack
- 73: Chassis side
- 75: Travel distance
- 77: Angular difference
- 79: Angle offset
- θ1, θ2: Angles of rotation

## Claims

1. Seat position sensor arrangement (21) for measuring the position (25) of a seat (1) with respect to a fixed part (17) of an automotive vehicle (3), wherein the seat position sensor arrangement (21) is provided with at least two wheels (27, 29) that are rotatably coupled by at least one driving mechanism (31) and adapted to rotate with different angular speeds upon being driven by the driving mechanism (31), wherein the seat position sensor arrangement (21) further comprises at least one rotation sensor subassembly (51, 53) for each wheel (27, 29), wherein each rotation sensor subassembly (51, 53) is adapted to measure an angle of rotation (θ1, θ2) of its respective wheel (27, 29).

2. Seat position sensor arrangement (21) according to claim 1, wherein the at least two wheels (27, 29) have different diameters (45, 47).

3. Seat position sensor arrangement (21) according to claim 1 or 2, wherein at least one of the wheels (27, 29) is a gear wheel (35, 37).

4. Seat position sensor arrangement (21) according to any one of claims 1 to 3, wherein the at least one driving mechanism (31) is arranged on a seat side (49) of the seat position sensor arrangement (21).

5. Seat position sensor arrangement (21) according to claim 4, wherein the at least one driving mechanism (31) is a drive gear (33).

6. Seat position sensor arrangement (21) according to any one of claims 1 to 5, wherein the at least one driving mechanism (31) is a gear rack (71).

7. Seat position sensor arrangement (21) according to any one of claims 1 to 6, wherein the at least one rotation sensor subassembly (51, 53) is a magnetic sensor arrangement (55, 57).

8. Seat position sensor arrangement (21) according to any one of claims 1 to 7, wherein the at least one rotation sensor subassembly (51, 53) is an inductive sensor arrangement.

9. Seat position sensor arrangement (21) according to any one of claims 1 to 8, wherein the seat position sensor arrangement (21) is connectable to a seat (1) of the vehicle (3) in order to move together with the seat (1).

10. Seat position sensor arrangement (21) according to any one of claims 1 to 8, wherein the at least two wheels (27, 29) and the corresponding rotation sensor subassemblies (51, 53) are connectable to a seat (1) of the vehicle (3) in order to move together with the seat (1) and wherein the at least one driving mechanism (31) is fixatable to a fixed part (17) of the vehicle (3).

11. Seat position sensor arrangement (21) according to any one of claims 1 to 10, wherein the seat position sensor arrangement (21) further comprises at least one data processing device (69) adapted to receive the angles of rotation (θ1, θ2) from the rotation sensor subassemblies (51, 53) and to calculate a seat position (25) and/or a seat travel distance (23) from the angles of rotation (θ1, θ2).

12. Seat position sensor arrangement (21) according to claim 11, wherein the data processing device (69) is arranged inside a common housing (63) of the arrangement (21).

13. Vehicle seat (1) which is provided with at least one seat position sensor arrangement (21) according to any one of claims 1 to 12.

14. Data processing device (69), the device (69) being adapted to compute a seat position (25) and/or a seat travel distance (23) of a vehicle seat (1) with respect to a fixed part (17) of an automotive vehicle (3) by receiving two angles of rotation (θ1, θ2) from wheels (27, 29) that rotate with different angular speeds, when the seat (1) is moved.

15. Method for determining a seat position (25) and/or a seat travel distance (23) of a vehicle seat (1) with respect to a fixed part (17) of an automotive vehicle (3), wherein at least two wheels (27, 29) are driven upon a movement of the seat (1), the wheels (27, 29) rotating with different angular speeds, wherein the angles of rotation (θ1, θ2) of both wheels (27, 29) are measured and a seat position (25) and/or a seat travel distance (23) is calculated from the angles of rotation (θ1, θ2).
